Europäisches Patentamt

European Patent Office

Office européen des brevets

(19)

(11) Numéro de publication : **0 500 452 A1**

(12) ## DEMANDE DE BREVET EUROPEEN

(21) Numéro de dépôt : **92400427.8**

(22) Date de dépôt : **18.02.92**

(51) Int. Cl.⁵ : **H04B 10/14, H04B 10/20**

(30) Priorité : **20.02.91 FR 9102035**

(43) Date de publication de la demande :
**26.08.92 Bulletin 92/35**

(84) Etats contractants désignés :
**DE GB IT**

(71) Demandeur : **FRANCE TELECOM
Etablissement autonome de droit public, 6,
Place d'Alleray
F-75015 Paris (FR)**

(72) Inventeur : **Guignard, Philippe
Le Dossen
F-22560 Pleumeur Bodou (FR)**
Inventeur : **Hamel, André
6 rue du Mouton Blanc
F-22300 Lannion (FR)**

(74) Mandataire : **Mongrédien, André et al
c/o BREVATOME 25, rue de Ponthieu
F-75008 Paris (FR)**

(54) **Réseau de communication optique.**

(57) Réseau de communication optique comprenant plusieurs stations (S1, S2, S3, S4) comportant chacune un émetteur d'informations (E1, E2, E3, E4) et un récepteur d'informations (R1, R2, R3, R4), les stations étant reliées entre elles par des supports de transmission de signaux optiques (22, 24) et des moyens (26) de gestion du réseau, chaque station comprenant, au niveau de l'émetteur, des moyens de codage des informations (10, 12, 14) par modulation d'un retard optique, un retard optique modulé comportant un retard principal fixe et un retard variable de modulation petit devant le retard principal fixe, et au niveau du récepteur des moyens de décodage des informations (16, 18, 20) par démodulation d'un retard optique.

Application aux réseaux de communication privés.

FIG. 1

EP 0 500 452 A1

La présente invention a pour objet un réseau de communication optique, notamment du type réseau privé.

Les réseaux de communication privés permettent la circulation de l'information à l'intérieur d'un même bâtiment ou de manière plus étendue entre différents bâtiments. Ces bâtiments peuvent être par exemple les différentes succursales d'une banque ou encore différents locaux d'une usine.

L'information, codée numériquement, circule entre des stations réparties dans les bâtiments et comprenant chacune un émetteur et un récepteur. Les supports de transmission de l'information sont des fibres optiques dans lequelles chaque canal de transmission correspond à une longueur d'onde particulière. Chaque fibre optique permet la propagation en multiplex de plusieurs faisceaux lumineux de longueurs d'onde différentes.

De tels réseaux de communication optique sont connus, et on peut citer, à titre d'exemple, le réseau désigné sous le nom Lambdanet développé par la Société ATT-Bellcore ou encore le réseau Multicolore développé par le centre National d'Etude des Télécommunications (CNET).

La présente invention concerne un autre type de réseau privé utilisant non pas le multiplexage optique mais la modulation de cohérence ou autrement dit, l'introduction de retard optique modulé d'une durée supérieure à la durée de cohérence du faisceau lumineux, support de l'information.

La modulation de cohérence est connue en soi ; on en trouve une description dans le brevet français n° 2 608 869. Une information est codée en retardant une partie du faisceau lumineux d'un retard principal supérieur à la durée de cohérence au faisceau lumineux auquel on ajoute un retard variable de modulation représentatif des bits d'information à coder. Le retard variable est bien entendu très petit devant le retard fixe et donc bien inférieur à la durée de cohérence.

Pour décoder l'information, on fait interférer les parties du faisceau lumineux en retardant la partie en avance d'un même retard principal ; on obtient une modulation d'intensité correspondant aux variations du retard variable, c'est-à-dire aux bits de l'information codée.

Un avantage d'un réseau privé utilisant la modulation de cohérence est constituée par le fait qu'il est possible d'utiliser plusieurs porteuses (chaque porteuse correspond à un retard principal donné) sur le même support, en assurant une séparation totale des différents canaux à la réception.

De manière plus précise, l'invention concerne un réseau de communication optique comprenant : plusieurs stations comportant chacune un émetteur d'informations et un récepteur d'informations, les stations étant reliées entre elles par des supports de transmission de signaux optiques et des moyens de gestion du réseau.

Chaque station comprend au niveau de l'émetteur, des moyens de codage des informations par modulation d'un retard optique, un retard optique modulé comportant un retard principal fixe et un retard variable de modulation petit devant le retard principal fixe, et au niveau du récepteur, des moyens de décodage des informations par démodulation d'un retard optique principal fixe, et en ce que l'un au moins de ces retards principaux fixes est accordable, c'est-à-dire modifiable à volonté.

D'autres caractéristiques et avantages de l'invention ressortiront mieux de la description qui va suivre, donnée à titre purement illustratif et nullement limitatif, en référence aux figures annexées dans lesquelles :

La figure 1 représente schématiquement un premier mode de réalisation d'un réseau conforme à l'invention,

la figure 2 représente schématiquement un second mode de réalisation d'un réseau conforme à l'invention,

la figure 3 représente schématiquement un troisième mode de réalisation d'un réseau conforme à l'invention,

la figure 4 représente schématiquement un quatrième mode de réalisation d'un réseau conforme à l'invention.

D'une manière générale, un réseau de communication optique comprend plusieurs stations comportant chacune un émetteur d'informations et un récepteur d'informations. Dans le cadre de l'invention, les informations circulent sous forme de signaux lumineux codés par la modulation d'un retard optique supérieur à la durée de cohérence des sources, productrices des faisceaux lumineux.

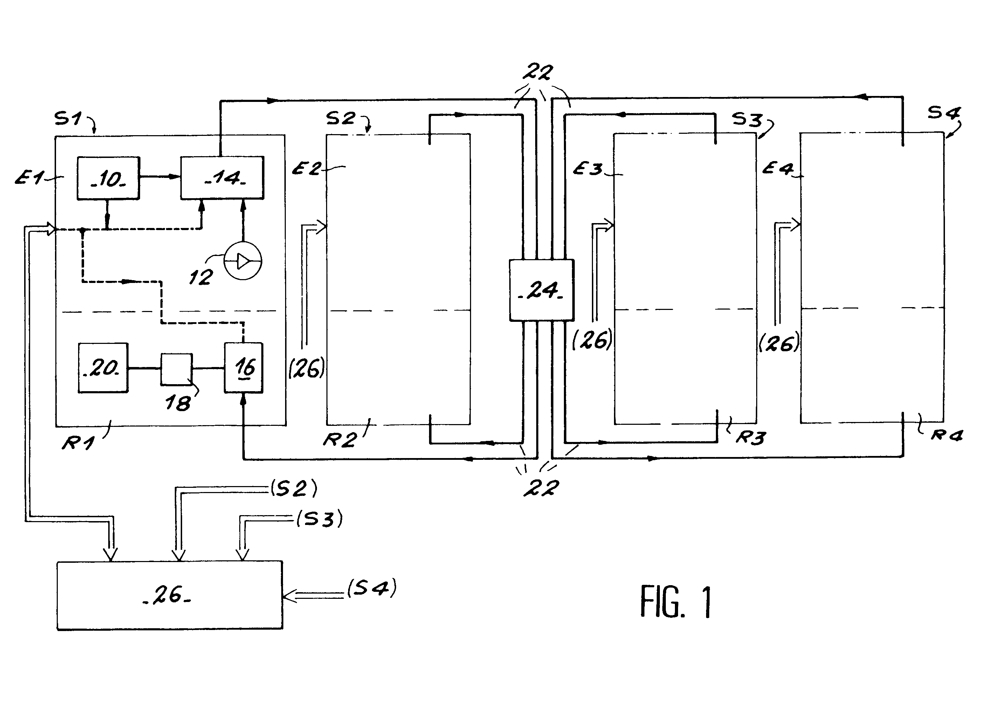

En référence à la figure 1, on décrit maintenant un réseau de communication conforme à l'invention.

De manière non limitative, pour simplifier la description, l'exemple de réseau représenté sur la figure 1 ne comporte que quatre stations référencées S1, S2, S3, S4. Chacune des stations S1, S2, S3, S4 comprend un émetteur référencé E1, E2, E3, E4 respectivement et un récepteur référencé R1, R2, R3, R4 respectivement.

Seule la station S1 est représentée en détail ; les autres possèdent une structure identique. Un émetteur possède des moyens de codage des informations qui comprennent un moyen 10 servant d'interface entre l'utilisateur et le reste du dispositif, une source lumineuse 12 et un modulateur 14. Le moyen 10 délivre des signaux de modulation correspondant aux informations à transmettre sur le réseau ; ce peut être par exemple un terminal d'ordinateur.

La source lumineuse 12 fournit un signal lumineux qui transporte les informations ; ce peut être une diode laser, électroluminescente ou superlumines- cente. Le signal lumineux est délivré en entrée du modulateur 14 commandé par les signaux de modulation issus du moyen 10. Ce modulateur 14 permet l'introduction d'un retard optique composé d'un retard principal fixe supérieure à la longueur de cohérence de la source 12 et d'un retard variable correspondant à la modulation. Le retard variable est petit devant le retard fixe de sorte qu'aucune modulation de l'intensité lumineuse n'apparaît en sortie du modulateur 14.

Le modulateur 14 peut être du type à effet électro-, acousto-, magnéto-, ou élasto- optique. La modulation peut aussi être induite par un effet mécanique ou par interférométrie.

Chaque récepteur comprend des moyens de décodage de l'information par démodulation d'un retard optique. Comme on peut le voir dans le cas de la station S1 détaillée, un récepteur comprend un démodulateur 16 relié à un détecteur optique 18 délivrant sur une sortie des signaux électriques correspondant aux informations. Le démodulateur permet de rattraper un retard principal introduit par un modulateur. On crée ainsi des interférences : l'intensité lumineuse est modulée en correspondance avec la modulation introduite à l'émission. Des moyens 20 pour délivrer des informations sont reliés à la sortie du détecteur 18 ; ils comprennent des moyens de mise en forme des signaux électriques délivrés par le détecteur 18. Les moyens 20 pour délivrer des informations peuvent être par exemple un écran d'affichage.

Le démodulateur 16, comme le modulateur, peut être de différents types. On trouve des exemples plus détaillés de réalisation de modulateur et démodulateur dans le brevet français n° 2 608 869 précité.

Chaque émetteur est relié aux récepteurs des autres stations par des supports de transmission de signaux optiques, à savoir des fibres optiques 22 monomodes ou multimodes interconnectées par un coupleur 24 du type "passif en étoile". De tels coupleurs sont par exemple commercialisés par la Société GOULD sous la référence 1270/1600 4x4 ou 8x8.

Dans l'exemple représenté sur la figure 1, la modulation des retards est effectuée en parallèle. A partir de cette architecture de base, diverses configurations sont possibles selon qu'un retard principal particulier est affecté à chaque station ou qu'un retard principal particulier est affecté à chaque type de service accessible sur le réseau.

Si un retard principal particulier est attribué à chaque station, l'adressage à une station s'effectue par le choix du retard qui lui est attribué. Pour cela on peut distinguer trois cas :

cas n° 1 : Un retard principal fixe non accordable est attribué à chaque émetteur alors que les retards attribués aux récepteurs sont accordables.

Il est alors possible de diffuser simultanément un message à toutes les stations, sans aucune confidentialité dans l'envoi.

Cas n° 2 : le retard attribué à chaque émetteur est accordable alors que les retards attribués aux récepteurs ne le sont pas.

Dans ce cas, l'émetteur utilisé s'accorde sur la station destinataire et les informations transmises ne sont reçues que par celle-ci. La confidentialité est donc bien assurée. En contrepartie, la diffusion d'un même message à toutes les stations oblige l'émetteur utilisé à réémettre les informations en s'accordant successivement sur toutes les stations.

Cas n° 3 : les retards attribués aux émetteurs et aux récepteurs sont accordables.

Cette architecture procure une plus grande souplesse de gestion, et permet de concevoir un réseau avec un nombre de stations supérieur au nombre de retards installés, en tenant compte du taux d'occupation du réseau par les utilisateurs.

Quelle que soit l'architecture retenue, des moyens de gestion 26 reliés à chaque station permettent d'attribuer dans chaque cas les retards aux émetteurs et/ou aux récepteurs. De tels moyens de gestion 26 sont constitués essentiellement d'un processeur programmé de façon appropriée.

Les moyens de gestion 26 gèrent aussi le mode de communication des informations entre stations. On peut distinguer la communication en mode "circuit", dans laquelle une liaison continue est établie au début de la communication, et est maintenue pendant toute la durée de cette communication, entre l'émetteur et le récepteur concernés et la communication en mode "paquet" dans laquelle les informations provenant de chaque émetteur sont disposées en pile et découpées en paquets de durée déterminée ; successivement, un paquet provenant de chaque émetteur est émis sur le réseau.

Si un retard principal particulier est affecté à chaque type de service accessible sur le réseau, on dispose alors de plusieurs réseaux mutuels sur le même support physique. Un retard principal unique concernant un service est attribué aux émetteurs et récepteurs des stations pour l'accès à ce service. Ces stations dialoguent entre-elles en utilisant par exemple un protocole classique du type à "jeton" ou à "détection de collision" géré par les moyens de gestion 26.

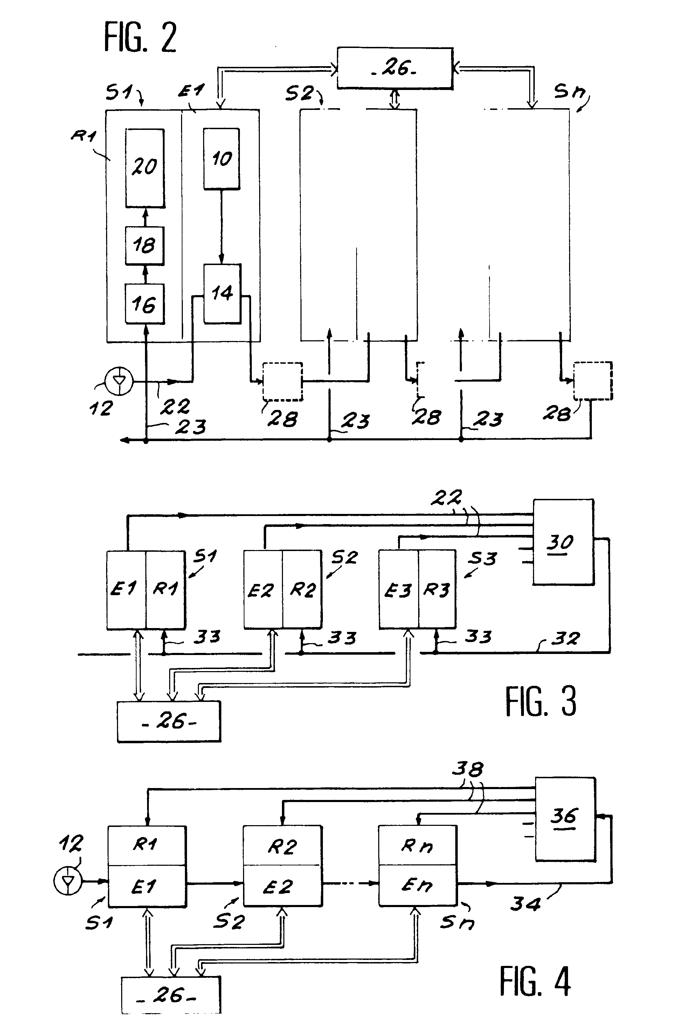

La figure 2 représente schématiquement un autre mode de réalisation d'un réseau conforme à l'invention. Comme on peut le voir sur la station S1 plus particulièrement détaillée, les stations comportent une structure quasiment identique à celle décrite précédememnt. C'est pourquoi les moyens identiques portent les mêmes références que sur la figure 1.

Le réseau de la figure 2 est du type "série" : une source lumineuse 12 est mise en commun pour toutes les stations S1, S2, ..., Sn, n représentant le nombre de stations. Cette source lumineuse 12 délivre un faisceau lumineux transporté par une fibre optique 22.

Cette fibre optique 22 est connecté à chaque émetteur et plus particulièrement en entrée et en sortie de chaque modulateur 14.

Des tronçons de sortie 23 en fibre optique sont connectés à la fibre 22 et aux récepteurs en entrée du démodulateur 16.

Comme dans tous les réseaux optiques, une amplification peut être nécessaire après le passage du faisceau lumineux par le modulateur. Sur cet exemple, on a représenté les amplificateurs optiques éventuels 28 connectés en sortie des émetteurs.

Dans cet exemple de réalisation, un retard principal particulier peut être attribué à chaque émetteur.

Un avantage de cette architecture est qu'elle ne possède qu'une source lumineuse unique. Il est donc plus facile d'en faire la maintenance.

La figure 3 représente schématiquement un autre mode de réalisation d'un réseau conforme à l'invention qui est en fait une architecture mixte : les stations S1, S2, S3 (sur l'exemple représenté, au nombre de trois dans un but de simplification ne présentant pas de caractère limitatif) possèdent des émetteurs E1, E2, E3, respectivement, reliés par des fibres optiques 22 aux entrées d'un coupleur 30 du type 1x8 commercialisé par exemple par la Société GOULD sous la référence 1270/1600 WIC. L'émission est donc organisée de manière identique à celle de la réalisation représentée sur la figure 1.

Le coupleur 30 délivre les signaux lumineux provenant des fibres optiques 22 sur une fibre de sortie 32 connectée à des tronçons de sortie 33. Chacun des tronçons de sortie 33 est relié à un des récepteurs R1, R2, R3. La réception est donc organisée de manière identique à celle de la réalisation représentée sur la figure 2.

Le multiplexage en parallèle des retards à l'émission autorise plusieurs stations à travailler avec un retard principal identique.

La figure 4 représente schématiquement un autre mode de réalisation d'un réseau conforme à l'invention qui est aussi une architecture mixte issue des réalisations représentées sur les figures 1 et 2.

Comme dans l'exemple de réalisation de la figure 2, une source lumineuse 12 émet un faisceau lumineux à l'entrée d'une fibre optique 34 qui relie les émetteurs des stations S1, S2, ..., Sn (n étant le nombre de stations) en série. La fibre optique 34 est connectée à l'entrée d'un coupleur 36 du type 1x4. Le coupleur 36 possède plusieurs sorties : chacune d'elles est reliée à une entrée d'un récepteur par une fibre optique 38.

On a donc ici une émission organisée de manière identique à celle de la réalisation représentée sur la figure 2 alors que la réception est organisée de manière identique à celle de la réalisation représentée sur la figure 1.

Dans chacun des modes de réalisation, les moyens 26 de gesion permettent de réaliser les protocoles de dialogues entre stations (par exemple à jeton ou à détection de collision) et le mode de transport de l'information (par exemple en mode "circuit" ou "par paquets").

On pourrait également réaliser un réseau à N stations, conforme à l'invention, dans lequel N1 stations ont un émetteur dont le retard principal fixe est accordable, N2 stations ont un récepteur dont le retard principal fixe est accordable et N3 stations ont un retard principal fixe accordable pour l'émetteur et le récepteur, avec N = N1 + N2 + N3, l'un des nombres N1, N2 et N3 pouvant être nul.

## Revendications

1. Réseau de communication optique comprenant plusieurs stations (S1, S2, S3, S4) comportant chacune un émetteur (E1, E2, E3, E4) d'informations et un récepteur d'informations, les stations étant reliées entre elles par des supports de transmission de signaux optiques (22, 24), et des moyens de gestion (26) du réseau, caractérisé en ce que chaque station comprend au niveau de l'émetteur, des moyens de codage des informations (10, 12, 14) par modulation d'un retard optique, un retard optique modulé comportant un retard principal fixe et un retard variable de modulation petit devant le retard principal fixe, et au niveau du récepteur, des moyens de décodage des informations (16, 18, 20) par démodulation d'un retard optique principal fixe, et en ce que l'un au moins de ces retards principaux fixes est modifiable à volonté.

2. Réseau selon la revendication 1, caractérisé en ce que plusieurs moyens de codage (10, 12, 14) et plusieurs moyens de décodage (16, 18, 20) possèdent le même retard principal fixe.

3. Réseau selon la revendication 1, caractérisé en ce que chaque émetteur (E1, E2, E3, E4) comporte une source lumineuse (12).

4. Réseau selon la revendication 1, caractérisé en ce qu'une source lumineuse (12) est commune à plusieurs émetteurs (E1, E2, E3, E4).

5. Réseau selon la revendication 1, caractérisé en ce qu'il comprend un coupleur (24, 30, 36) connecté en entrée aux émetteurs et en sortie aux récepteurs.

6. Réseau selon la revendication 1, caractérisé en ce que le retard principal fixe relatif à chaque émetteur (E1, E2, E3, E4) est modifiable à volonté.

7. Réseau selon la revendication 1, caractérisé en ce que le retard principal fixe relatif à chaque récepteur (R1, R2, R3, R4) est modifiable à volonté.

8. Réseau selon la revendication 1, caractérisé en ce que le retard principal fixe relatif à chaque émetteur et à chaque récepteur est modifiable à volonté.

FIG. 1

EP 0 500 452 A1

# FIG. 2

# FIG. 3

# FIG. 4

Office européen
des brevets

**RAPPORT DE RECHERCHE EUROPEENNE**

Numero de la demande

EP 92 40 0427

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | FR-A-2 608 869 (L'ETAT FRANCAIS) * Page 1, ligne 6 - page 3, ligne 22; page 4, ligne 26 - page 6, ligne 23; figures 1,2 * | 1,3,5,7 | H 04 B 10/14 H 04 B 10/20 |
| E | FR-A-2 656 752 (THOMSON) * En entier * | 1,3,5,7 | |
| A | EP-A-0 213 607 (CGE) * Figure 1; page 1, lignes 1-31 * | 1,3,5 | |
| A | JOURNAL OF LIGHTWAVE TECHNOLOGY, vol. LT-3, no. 5, octobre 1985, pages 1061-1071, New York, US; J.L. BROOKS et al.: "Coherence multiplexing of fiber-optic interferometric sensors" * Page 1062, colonne de droite, lignes 6-46; figure 1 * | 1,3,4 | |

**DOMAINES TECHNIQUES RECHERCHES (Int. Cl.5)**

H 04 B
H 04 L

Le présent rapport a été établi pour toutes les revendications

| Lieu de la recherche | Date d'achèvement de la recherche | Examinateur |
|---|---|---|
| LA HAYE | 18-05-1992 | WAGNER U. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)